# EUROPÄISCHE PATENTSCHRIFT

(11) **EP 3 197 753 B1**
(45) Veröffentlichungstag und Bekanntmachung des Hinweises auf die Patenterteilung: **02.10.2019**
(21) Anmeldenummer: 15753701.0
(22) Anmeldetag: 25.08.2015
(51) Int. Cl.: B62D 25/10, B60Q 1/04, B60Q 1/05, B60Q 1/26, B60Q 1/56, B62D 25/12, B62D 29/04

(54) **FAHRZEUG MIT EINER BEWEGLICHEN KLAPPE UND VERFAHREN ZUM BEFESTIGEN UND/ODER AUSRICHTEN EINES BAUTEILS AN EINEM FAHRZEUG**
VEHICLE WITH A MOVABLE FLAP AND METHOD FOR FASTENING AND/OR ALIGNING A COMPONENT ON A VEHICLE
VÉHICULE MUNI D'UN OUVRANT MOBILE ET PROCÉDÉ PERMETTANT DE FIXER ET/OU DE POSITIONNER UN COMPOSANT SUR UN VÉHICULE

(30) Priorität: 23.09.2014 DE 102014214204
(43) Veröffentlichungstag der Anmeldung: 02.08.2017
(73) Patentinhaber: Bayerische Motoren Werke Aktiengesellschaft, 80809 München (DE)
(72) Erfinder: HAAS, Thorsten, 85716 Unterschleissheim (DE); HUBER, Daniel, 80995 München (DE); WOHLRAPP, Manfred, 85716 Unterschleissheim (DE)
(86) Internationale Anmeldenummer: PCT/EP2015/069405
(87) Internationale Veröffentlichungsnummer: WO 2016/045892

(56) Entgegenhaltungen:
- DE-A1- 2 313 457
- DE-A1- 3 818 367
- DE-T2- 60 317 284
- DE-T2- 69 404 396
- DE-U1- 20 112 696
- JP-A- H06 321 001
- JP-A- H11 165 657
- JP-A- S63 184 535
- US-A- 2 584 576
- US-A- 3 544 786
- US-A- 4 153 291
- US-A- 5 275 249
- US-A- 5 394 311

## Beschreibung

Die Erfindung betrifft ein Fahrzeug mit einer beweglichen Klappe, wie einer Motorhaube o. dgl., und mit einem Bauteil, wie einem Scheinwerfer, einer Heckleuchte, einem Ziergitter o. dgl., wobei das Bauteil mittels Befestigung- und/oder Ausrichtelementen mit der Karosserie des Fahrzeuges verbunden ist und wobei die Klappe das Bauteil in einem geschlossenem Zustand zumindest teilweise umgibt.

Die Erfindung betrifft ferner ein Verfahren zum Befestigen und/oder Ausrichten eines Bauteil, wie einem Scheinwerfer, einer Heckleuchte, einem Ziergitter o. dgl., an einem Fahrzeug, wobei das Fahrzeug eine bewegliche Klappe, wie eine Motorhaube o. dgl., aufweist, welche das Bauteil in einem geschlossenem Zustand zumindest teilweise umgibt.

Bei Fahrzeugen sind aus Designgründen oftmals die Befestigungs- und/oder Ausrichtelemente von Bauteilen, wie Scheinwerfer, Ziergitter, Heckleuchten usw., von Karosserieteilen, z. B. einer Motorhaube, verdeckt, so dass sie unter normalen Umständen von außen weder sichtbar noch erreichbar sind. Dies mag aus designtechnischen Gründen zwar sinnvoll erscheinen, macht jedoch bei der Montage und/oder Ausrichtung erhebliche Schwierigkeiten, da die Befestigungs- und/oder Ausrichtelemente nur dann erreichbar sind, wenn die entsprechenden Karosserieteile abgenommen oder angehoben ist. In diesem Zustand ist eine Ausrichtung bezüglich der Karosserieteile aber nicht oder nur mit Schwierigkeiten durchführbar, da das zu referenzierende Bauteil nicht vorhanden ist.

Sind beispielsweise die Scheinwerfer von der Motorhaube des Fahrzeuges ganz oder teilweise umschlossen und ist überdies um den Scheinwerfer herum ein Abdeckelement, z. B. ein Chromring, angeordnet, das entweder am Scheinwerfer oder an der Motorhaube befestigt ist, ist ein Zugang zu den Befestigungs- und/oder Ausrichtelementen des Scheinwerfers nur bei geöffneter, nicht aber bei geschlossener Motorhaube möglich. In geöffnetem Zustand kann der Scheinwerfer bezüglich der Motorhaube jedoch nicht oder nur mit erhöhtem Aufwand ausgerichtet werden, da das zu referenzierende Bauteil nicht vorhanden ist.

Um trotzdem eine Ausrichtung des Scheinwerfers zu ermöglichen wurde bisher der Scheinwerfer am Frontend des Fahrzeuges vormontiert. Dann wurde die Motorhaube geschlossen und das erreichte Ergebnis des Fugenbildes ermittelt, um über eine Wiederholung des Einstellvorgangs das zu erreichende Fugenbild zu verbessern. Beim Schließen der Motorhaube und auch beim Ausrichten bestand dabei jedoch die Gefahr, dass Bauteile beschädigt wurden. Nach dem Ausrichten wurde die Motorhaube wieder geöffnet, dann wurden die Scheinwerferbefestigungs- bzw. -ausrichtschrauben auf das erforderliche Drehmoment angezogen, wobei im ungünstigsten Fall die Einstellung der Scheinwerfer zur Motorhaube bzw. zum Chromring wieder verloren gehen konnte. Diese Vorgehensweise muss mehrmals wiederholt werden, um das geforderte Zielbild des Fugenbildes zu erreichen.

Aus der DE 38 18 367 A1 ist ein Fahrzeug mit einer beweglichen Klappe, wie einer Motorhaube o. dgl., und mit einem Bauteil, wie einem Scheinwerfer, einer Heckleuchte, einem Ziergitter o. dgl. bekannt, wobei das Bauteil mittels Befestigung- und/oder Ausrichtelementen mit der Karosserie des Fahrzeuges verbunden ist und wobei die Klappe das Bauteil in einem geschlossenen Zustand zumindest teilweise umgibt.

Allerdings sind dort die Befestigungs- und/oder Ausrichtelemente im Betriebszustand nicht von einer beweglichen Klappe überdeckt. Das Befestigen und Ausrichten ist daher aufwändig und kann zu einer Beschädigung der Bauteile führen.

Es ist daher Aufgabe der vorliegenden Erfindung, ein Fahrzeug und ein Verfahren zum Befestigen und/oder Ausrichten eines Bauteils an der Karosserie eines Fahrzeuges, dessen Befestigungs- und/oder Ausrichtelemente im Betriebszustand von einer beweglichen Klappe überdeckt sind, anzugeben, das einfach durchzuführen ist, bei geschlossener Klappe erfolgen kann, und eine Beschädigung der Bauteile weitgehend ausschließt.

Diese Aufgabe wird bei einem Fahrzeug mit einer beweglichen Klappe, wie einer Motorhaube o. dgl., und mit einem Bauteil, wie einem Scheinwerfer, einer Heckleuchte, einem Ziergitter o. dgl., wobei das Bauteil mittels Befestigung- und/oder Ausrichtelementen mit der Karosserie des Fahrzeuges verbunden ist und wobei die Klappe das Bauteil in einem geschlossenem Zustand zumindest teilweise umgibt, erfindungsgemäß dadurch gelöst, dass die Befestigungs- und/oder Ausrichtelemente des Bauteils in geschlossenem Zustand der Klappe durch diese hindurch zugänglich sind, wozu die Klappe mit Ausnehmungen versehen, durch welche die Befestigungs- und/oder Ausrichtelemente des Bauteils in geschlossenem Zustand der Klappe zugänglich sind.

Infolge der erfindungsgemäßen Lösung können Beschädigungen der Bauteile und der beweglichen Klappe weitgehend vermieden werden. Darüber hinaus werden die Montage und die Ausrichtung der Bauteile vereinfacht, da die entsprechenden Befestigung- und/oder Ausrichtelemente leicht zugänglich sind und sämtliche Arbeiten von vorne durchgeführt werden können.

Zudem muss der erforderliche Einstellvorgang nur einmal stattfinden um die geforderte Präzision im Fugenbild zu erreichen da alle Referenzbauteile im geschlossenen Zustand sind und das Fahrzeug auf seinen Rädern stehen kann.

Die Unteransprüche beinhalten vorteilhafte Weiterbildungen und Ausgestaltungen der Erfindung.

Gemäß einer vorteilhaften Weiterbildung ist ein Abdeckelement, beispielsweise ein Chrom- oder Zierring vorgesehen, welches die Ausnehmungen in der Klappe abdeckt oder das Fugenkonzept so gestaltet ist, dass eine Zugänglichkeit zu den Befestigungs- und Ausrichtelementen gegeben ist.

Die vorstehend genannte Aufgabe wird weiterhin bei einem Verfahren zum Befestigen und/oder Ausrichten eines Bauteil, wie einem Scheinwerfer, einer Heckleuchte, einem Ziergitter o. dgl., an einem Fahrzeug, wobei das Fahrzeug eine bewegliche Klappe, wie eine Motorhaube o. dgl., aufweist, welche das Bauteil in einem geschlossenem Zustand zumindest teilweise umgibt, erfindungsgemäß dadurch gelöst, dass das Befestigen und/oder Ausrichten des Bauteils bei geschlossener Klappe durch diese hindurch erfolgt, wozu bei der Herstellung der Klappe Ausnehmungen zum Durchtritt des Werkzeuges in die Klappe eingebracht werden, durch welche ein Befestigen und/oder Ausrichten des Bauteils möglich wird.

Das erfindungsgemäße Verfahren ermöglicht eine einfache Montage und Ausrichtung der Bauteile von vorne.

Alternativ kann das Fugenkonzept so gestaltet sein, dass eine Zugänglichkeit zu den Befestigungs- und Ausrichtelementen gegeben ist.

Die Unteransprüche beinhalten vorteilhafte Weiterbildungen und Ausgestaltungen der Erfindung.

Um diese Ausnehmungen sowie die Befestigungs- und/oder Ausrichtelemente später zu verdecken, kann an der Klappe ein Abdeckelement, beispielsweise eine Chrom- oder Zierring angebracht werden.

Das Verfahren weist gemäß einer vorteilhaften Weiterbildung folgende Schritte auf:
- während sich die bewegliche Klappe in einem geöffneten Zustand befindet, wird an dem an der Karosserie vormontierten Bauteil eine erste Lehre angebracht,
- die Klappe wird geschlossen, wobei die erste Lehre eine Beschädigung des Bauteils verhindert,
- bei geschlossener Klappe wird eine zweite Lehre auf das Bauteil aufgesetzt, mit deren Hilfe das Bauteil bezüglich der Klappe ausgerichtet wird,
- ein Werkzeug wird an der zweiten Lehre angebracht, um die Befestigungs- und/oder Ausrichtelemente zu betätigen,
- das Werkzeug und die zweite Lehre werden entfernt,
- die Klappe wird geöffnet und die erste Lehre wird entfernt.

Durch diese Verfahrensschritte können in vorteilhafterweise Beschädigungen der Bauteile und der Klappe weitgehend vermieden werden, und durch die Verwendung von Lehren, die sogar wiederverwendet werden können, ist eine wiederholgenaue und präzise Ausrichtung der Bauteile ohne nachträgliche negative Einflussfaktoren wie z.B. Fahrzeug von Gehänge auf die Räder stellen (Verzug, Setzverhalten) möglich.

Weitere Einzelheiten, Merkmale und Vorteile der Erfindung ergeben sich aus der nachfolgenden Beschreibung anhand der Zeichnungen. Es zeigen:
- Figur 1: eine Teilansicht eines Fahrzeuges im Bereich eines Scheinwerfers während der Montage,
- Figur 2: die Teilansicht gemäß Figur 1 nach erfolgter Montage, und
- Figur 3: die einzelnen Verfahrensschritte des erfindungsgemäßen Verfahrens.

Als Beispiel wird in der folgenden Beschreibung die Befestigung bzw. Ausrichtung eines Scheinwerfers 1 an der Karosserie 2 eines Fahrzeuges gewählt, dessen Befestigungs- und/oder Ausrichtelemente im Betriebszustand von einer Motorhaube 3 des Fahrzeugs überdeckt sind.

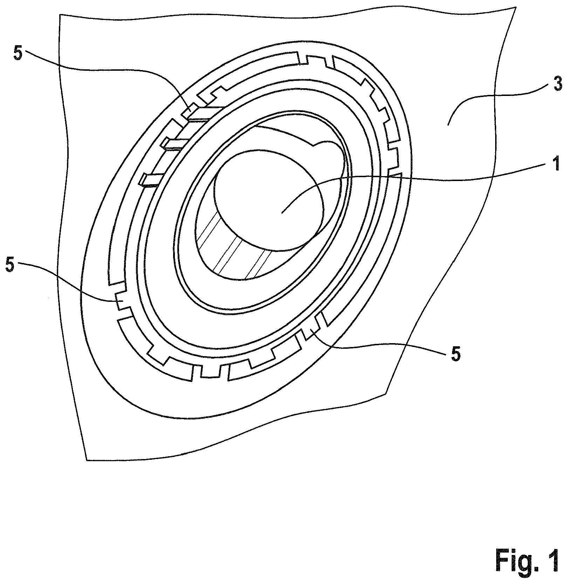

In Figur 1 ist eine Teilansicht eines Fahrzeuges im Bereich des vorderen Scheinwerfers 1 zu sehen. Der Scheinwerfer 1 ist an der Karosserie 2 des Fahrzeuges mittels Befestigungs- und/oder Ausrichtelementen vormontiert. Der Scheinwerfer 1 wird bei geschlossener Klappe bzw. Motorhaube 3 von dieser vollständig umschlossen. Um trotzdem einen Zugriff auf die Befestigungs- und/oder Ausrichtelemente zu ermöglichen, sind in der Motorhaube 3 Ausnehmungen 5 vorgesehen, welche bereits bei der Herstellung der Motorhaube 3 in diese eingebracht werden.

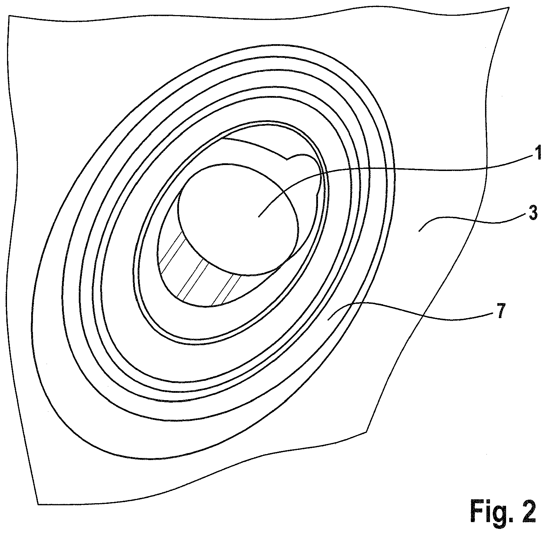

Figur 2 zeigt die Teilansicht nach Figur 1 nach erfolgter Befestigung bzw. Ausrichtung des Scheinwerfers 1. Um die in der Motorhaube 3 vorgesehenen Ausnehmungen 5 und die Befestigungs- und/oder Ausrichtelemente zu verbergen, ist ein Abdeckelement, z. B. ein Chromring 7 an der Motorhaube 3 befestigt, welcher die Ausnehmungen 5 abdeckt.

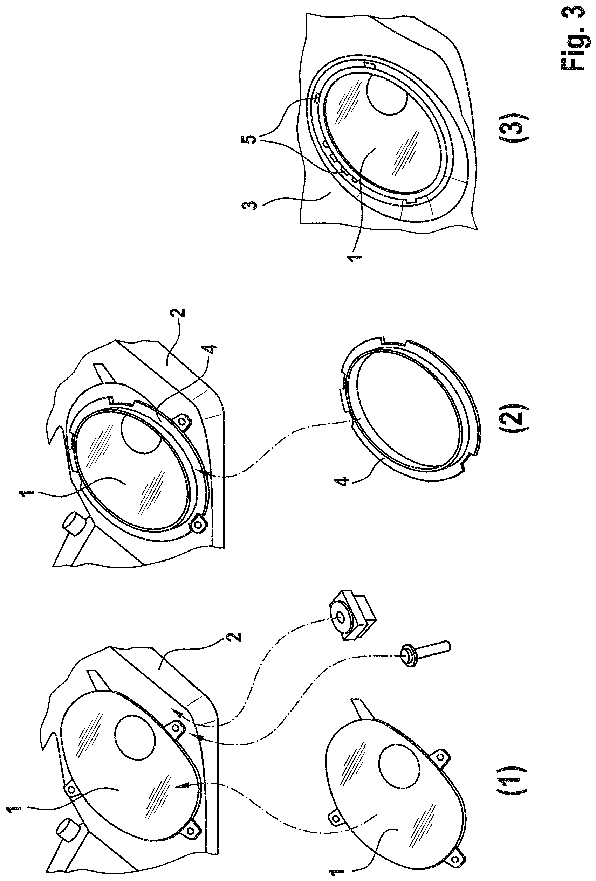

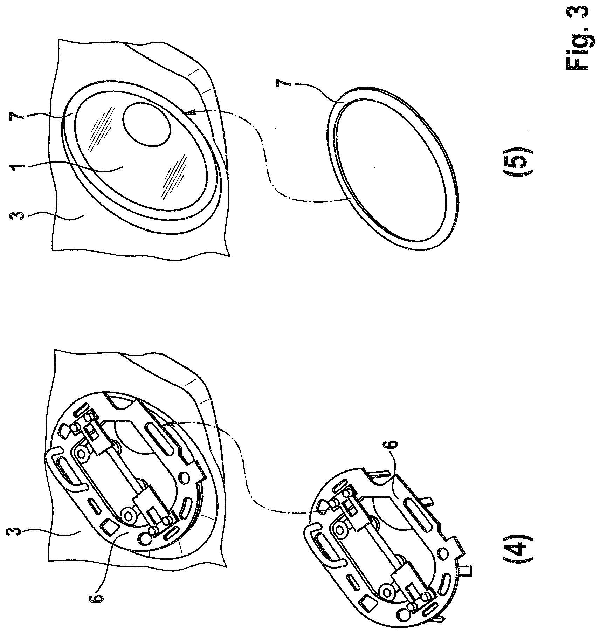

In Figur 3 sind die einzelnen Verfahrensschritte der Montage und/oder Ausrichtung des Scheinwerfers 1 dargestellt.

In dem in Figur 3 mit (1) bezeichneten Bild ist die Motorhaube 3 des Fahrzeugs geöffnet. In diesem Zustand wird der Scheinwerfer 1 an der Karosserie 2 vormontiert, aber noch nicht endgültig befestigt und/oder ausgerichtet.

Bei weiterhin geöffneter Motorhaube 3 wird anschließend eine erste Lehre 4 an dem Scheinwerfer 1 montiert. Dies ist in dem mit (2) bezeichneten Bild in Figur 3 zu sehen.

Nunmehr wird die Motorhaube 3 geschlossen, wobei die Motorhaube 3 die erste Lehre 4 zumindest teilweise überdeckt. Dieser Zustand ist in dem mit (3) bezeichneten Bild in Figur 3 zu sehen. Die erste Lehre 4 verhindert dabei eine Beschädigung des Scheinwerfers 1 und/oder der Motorhaube 3.

In dem mit (3) bezeichneten Bild in Figur 3 sind auch die Ausnehmungen 5 in der Motorhaube 3 zu erkennen, welche bei der Herstellung der Motorhaube 3 erzeugt worden sind und welche einen Zugriff auf die Befestigungs- und/oder Ausrichtelemente ermöglichen.

Als nächstes wird dann bei geschlossener Motorhaube 3 eine zweite Lehre 6 an dem Scheinwerfer 1 angebracht. Dies ist in dem mit (4) bezeichneten Bild in Figur 3 gezeigt. Mit Hilfe dieser zweiten Lehre 6 kann der Scheinwerfer 1 bezüglich der Karosserie 2 und/oder der Motorhaube 3 ausgerichtet werden. Nachdem bei geschlossener Motorhaube 3 des Scheinwerfer 1 ausgerichtet ist, werden die Befestigungs- und/oder Ausrichtelemente mit einem entsprechenden Werkzeug auf das erforderliche Drehmoment angezogen. Nunmehr ist der Scheinwerfer 1 bezüglich der Karosserie 2 und der Motorhaube 3 präzise ausgerichtet.

Danach wird zunächst die zweite Lehre 6 entfernt, dann die Motorhaube 3 geöffnet und schließlich die erste Lehre 4 entfernt. Als letzter Schritt wird dann noch ein Chromring 7 an der Motorhaube 3 befestigt, welcher die Ausnehmungen 5 für die Befestigungs- und/oder Ausrichtelemente überdeckt. Dieser Zustand ist in dem mit (5) bezeichneten Bild in Figur 3 zu sehen.

Das vorstehend am Beispiel eines Scheinwerfers beschriebene Verfahren kann in gleicher Weise aus bei anderen Bauteilen, deren Befestigungs- und/oder Ausrichtelemente von einer beweglichen Klappe in einem geschlossenem Zustand zumindest teilweise umgeben sind, angewandt werden, z. B. bei Ziergittern, Heckleuchten usw.

Die vorhergehende Beschreibung der vorliegenden Erfindung dient nur zu illustrativen Zwecken und nicht zum Zwecke der Beschränkung der Erfindung.

### Bezugszeichenliste

- 1: Scheinwerfer
- 2: Karosserie
- 3: Motorhaube
- 4: erste Lehre
- 5: Ausnehmungen
- 6: zweite Lehre
- 7: Chromring

## Patentansprüche

1. Fahrzeug mit einer beweglichen Klappe, wie einer Motorhaube o. dgl., und mit einem Bauteil, wie einem Scheinwerfer, einer Heckleuchte, einem Ziergitter o. dgl., wobei das Bauteil mittels Befestigung- und/oder Ausrichtelementen mit der Karosserie des Fahrzeuges verbunden ist und wobei die Klappe das Bauteil in einem geschlossenem Zustand zumindest teilweise umgibt, **dadurch gekennzeichnet, dass** die Befestigungs- und/oder Ausrichtelemente des Bauteils (1) in geschlossenem Zustand der Klappe (3) durch diese hindurch zugänglich sind, wozu die Klappe (3) mit Ausnehmungen (5) versehen ist, durch welche die Befestigungs- und/oder Ausrichtelemente des Bauteils (1) in geschlossenem Zustand der Klappe (3) zugänglich sind.

2. Fahrzeug nach Anspruch 1, **dadurch gekennzeichnet, dass** ein Abdeckelement (7) vorgesehen ist, welches die Ausnehmungen (5) in der Klappe (3) abdeckt.

3. Verfahren zum Befestigen und/oder Ausrichten eines Bauteils, wie einem Scheinwerfer, einer Heckleuchte, einem Ziergitter o. dgl., an einem Fahrzeug, wobei das Fahrzeug eine bewegliche Klappe, wie eine Motorhaube o. dgl., aufweist, welche das Bauteil in einem geschlossenem Zustand zumindest teilweise umgibt, **dadurch gekennzeichnet, dass** das Befestigen und/oder Ausrichten des Bauteils (1) bei geschlossener Klappe (3) durch diese hindurch erfolgt, wozu bei der Herstellung der beweglichen Klappe (3) Ausnehmungen (5) in die Klappe (3) eingebracht werden, durch welche ein Befestigen und/oder Ausrichten des Bauteils (1) möglich wird.

4. Verfahren nach Anspruch 3, **dadurch gekennzeichnet, dass** an der Klappe (1) ein Abdeckelement (7) angebracht wird, welches die Ausnehmungen (5) in der Klappe (3) abdeckt.

5. Verfahren nach einem der Ansprüche 3 oder 4, **gekennzeichnet durch** folgende Schritte:
- während sich die bewegliche Klappe (3) in einem geöffneten Zustand befindet, wird an dem an der Karosserie (2) vormontierten Bauteil (1) eine erste Lehre (4) angebracht,
- die Klappe (3) wird geschlossen, wobei die erste Lehre (4) eine Beschädigung des Bauteils (1) verhindert,
- bei geschlossener Klappe (3) wird eine zweite Lehre (6) auf das Bauteil (1) aufgesetzt, mit deren Hilfe das Bauteil (1) bezüglich der Klappe (3) ausgerichtet wird,
- ein Werkzeug wird an der zweiten Lehre (6) angebracht, um die Befestigungs- und/oder Ausrichtelemente zu betätigen,
- das Werkzeug und die zweite Lehre (6) werden entfernt,
- die Klappe (3) wird geöffnet und die erste Lehre (4) wird entfernt.

## Claims

1. A vehicle with a movable flap, such as an engine bonnet or the like, and with a component, such as a headlight, a tail light, a trim grille or the like, wherein the component is connected by means of fastening and/or alignment elements to the body of the vehicle and wherein the flap at least partially surrounds the component in a closed state, **characterised in that** the fastening and/or alignment elements of the component (1) in the closed state of the flap (3) are accessible therethrough, to which end the flap (3) is provided with cutouts (5) through which the fastening and/or alignment elements of the component (1) are accessible in the closed state of the flap (3).

2. A vehicle according to Claim 1, **characterised in that** a covering element (7) which covers the cutouts (5) in the flap (3) is provided.

3. A method for fastening and/or aligning a component, such as a headlight, a tail light, a trim grille or the like, on a vehicle, wherein the vehicle has a movable flap, such as an engine bonnet or the like, which at least partially surrounds the component in a closed state, **characterised in that** the fastening and/or alignment of the component (1) when the flap (3) is closed takes place therethrough, to which end during production of the movable flap (3) cutouts (5) are introduced into the flap (3) through which fastening and/or alignment of the component (1) becomes possible.

4. A method according to Claim 3, **characterised in that** a covering element (7) which covers the cutouts (5) in the flap (3) is attached to the flap (1).

5. A method according to one of Claims 3 or 4, **characterised by** the following steps:
- while the movable flap (3) is in an opened state, a first template (4) is attached to the component (1) pre-mounted on the vehicle body (2),
- the flap (3) is closed, with the first template (4) preventing damage to the component (1),
- when the flap (3) is closed, a second template (6) with the aid of which the component (1) is oriented with respect to the flap (3) is placed on the component (1),
- a tool is attached to the second template (6) in order to actuate the fastening and/or alignment elements,
- the tool and the second template (6) are removed,
- the flap (3) is opened and the first template (4) is removed.

## Revendications

1. Véhicule comportant un clapet mobile tel qu'un capot ou similaire ainsi qu'un composant tel qu'un phare, un feu arrière, une calandre ou similaire, le composant étant relié à la carrosserie du véhicule, au moyen d'éléments de fixation et/ou d'éléments d'alignement et le clapet entourant au moins partiellement le composant à l'état fermé,
**caractérisé en ce que**
les éléments de fixation et/ou d'alignement du composant (1), sont accessibles, à l'état fermé du clapet (3), au travers de celui-ci, et à cet effet le clapet (3) est muni d'évidements (5) au travers desquels les éléments de fixation et/ou d'alignement du composant (1) sont accessibles à l'état fermé du clapet (3).

2. Véhicule conforme à la revendication 1,
**caractérisé en ce qu'**
il est prévu un élément de recouvrement (7) qui recouvre les évidements (5) du clapet (3).

3. Procédé de fixation et/ou d'alignement d'un composant tel qu'un phare, un feu arrière, une calandre ou similaire sur un véhicule,
selon lequel, le véhicule comporte un clapet mobile tel qu'un capot ou similaire qui entoure au moins partiellement le composant à l'état fermé,
**caractérisé en ce que**
la fixation et/ou l'alignement du composant (1) s'effectue, lorsque le clapet (3) est fermé, au travers de celui-ci, et à cet effet lors de la fabrication du clapet mobile (3) sont incorporés dans le clapet (3) des évidements (5) au travers desquels une fixation et/ou un alignement du composant (1) est possible.

4. Procédé conforme à la revendication 3,
**caractérisé en ce qu'**
on incorpore sur le clapet (3) un élément de recouvrement (7) qui recouvre les évidements (5) du clapet (3).

5. Procédé conforme à l'une des revendications 3 et 4,
comprenant les étapes suivantes consistant à :
- lorsque le clapet mobile (3) est à l'un état ouvert, un premier module ou calibre (4) est installé sur le composant (1) prémonté sur la carrosserie (2),
- le clapet (3) et fermé et le premier calibre (4) empêche un endommagement du composant (1),
- lorsque le clapet (3) est fermé, un second calibre (6) sur le composant (1) est positionné à l'aide duquel ce composant (1) est aligné par rapport au clapet (3),
- un outil est positionné sur le second calibre (6) pour actionner les éléments de fixation et/ou d'alignement,
- l'outil et le second calibre (6) sont enlevés,
- la clapet (3) est ouvert et le premier calibre (4) est enlevé.
